# EUROPEAN PATENT SPECIFICATION

(11) **EP 1 688 250 B1**
(45) Date of publication and mention of the grant of the patent: **26.08.2009**
(21) Application number: 06101248.0
(22) Date of filing: 03.02.2006
(51) Int. Cl.: B32B 37/22, B32B 38/00

(54) **Cutting equipment for plasticized supports**
Schneidvorrichtung für plastifizierte Träger
Dispositif de coupe pour supports plastifiés

(30) Priority: 08.02.2005 IT MI20050034 U
(43) Date of publication of application: 09.08.2006
(73) Proprietor: Maieron, Natalina, 20052 Monza MI (IT)
(72) Inventor: Rossi, Alvaro, 20052 Monza (Milan) (IT); Rossi, Marco, 20052 Monza (Milan) (IT)
(74) Representative: De Gregori, Antonella

(56) References cited:
- WO-A-01/76832
- US-A1- 2004 221 947

## Description

The present invention relates to cutting equipment for plasticized supports.

In the plasticization field in general, in particular relating to supports such as sheets of paper, cardboard, etc., with a plastic film such as polyethylene, polypropylene, polyester, etc., these supports are fed to a coupling calender together with the preselected film. This film is coupled by the calender on the specific visible surface of said supports fed successively into appropriate equipment and after said coupling they must be separated into the desired end-form.

There is consequently first of all the necessity of envisaging, downstream of the coupling calender, a device which facilitates or effects the separation of plastic material in film form in correspondence with the overlapping between one support and another.

In order to solve the above problem, cutting equipment for plasticized supports has been proposed, equipped with a pair of calenders between which there is a rotating cutting head. A coupled composite material consisting of supports overlapping at their transversal ends and plastic film which constrains them to each other, is fed below said head. A control device, situated on a calender positioned, in a distal area, at the beginning of the apparatus measures the preset length of said support, thus activating the cutting head at the end of the preset length of the single support.

Such a cutting equipment is e.g. known from WO-A-01/76832.

It has been observed however that the above solution does not take into account the elastic behaviour of the material during the feeding course of the coupled composite material, which inevitably influences the cutting precision.

In view of what is specified above, there is evidently the necessity of availing of a machine, such as that according to the present invention, which eliminates or in any case significantly reduces, precision errors in the prefixed cutting area and which, at the same time, guarantees at least the same degree of efficiency as cutting equipment for plasticized supports of the traditional type.

An objective of the present invention is therefore to find a convenient solution to the above problem.

A further objective of the present invention is to provide cutting equipment for plasticized supports which is effective in separating plasticized supports.

Another objective is to provide equipment which, although suitable for exerting the function mentioned above, is particularly simple to operate and can even be adopted singly and not directly on line with the coupling machine between film and support.

Yet another objective is to provide equipment which functions well when the film is stably anchored to the support and there is no further necessity of drying, after separation.

These objectives according to the present invention are achieved by providing the cutting equipment for plasticized supports as specified in claim 1 enclosed.

Further important characteristics and details of the present invention are object of the subsequent dependent claims.

The characteristics and advantages of the cutting equipment for plasticized supports according to the present invention will appear more evident from the following illustrative and non-limiting description of an embodiment with reference to the enclosed figures in which:

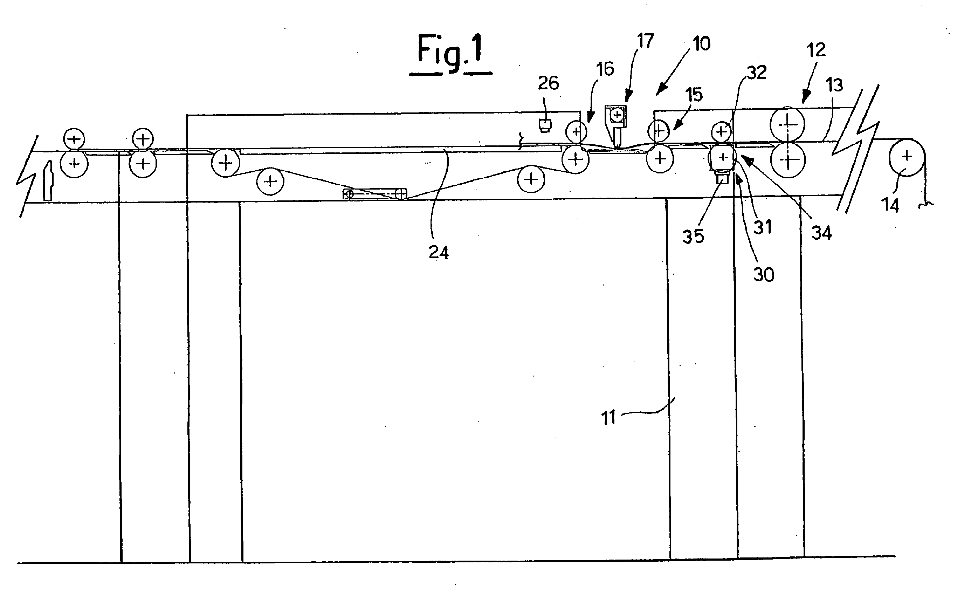

figure 1 is a raised schematic side view of the equipment according to the present invention;

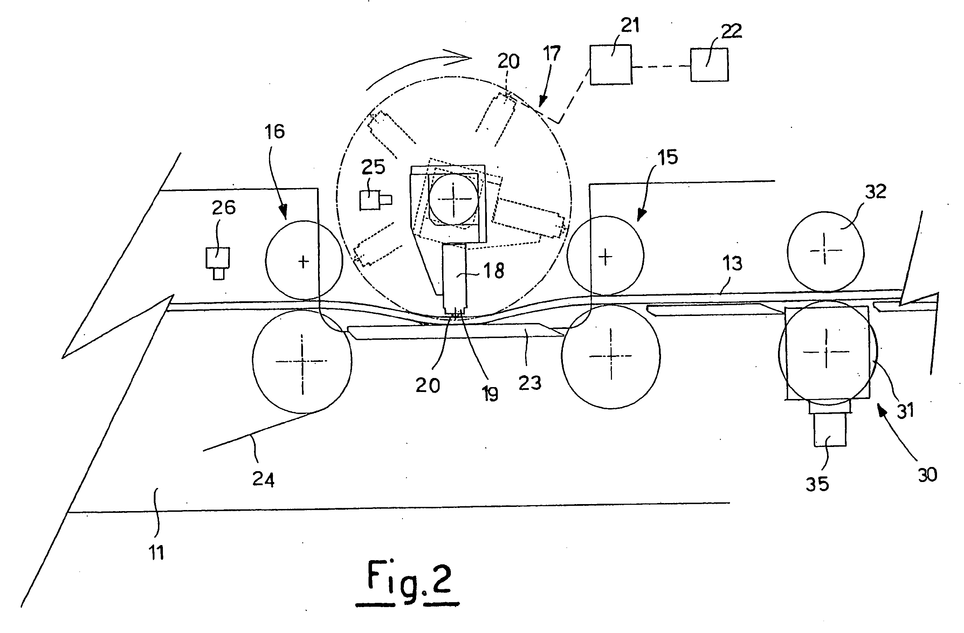

figure 2 is an enlarged perspective view of a cutting head of the equipment.

With general reference to the various figures, these schematically show cutting equipment for plasticized supports according to the invention, indicated as a whole with 10.

Said equipment 10 comprises a frame 11, schematized as a shoulder, on which a first feeding calender 12 is positioned, consisting of a pair of cylinders which receive a coupled composite material 13, consisting of supports overlapping at their transversal ends and plastic film which constrains them one behind the other. According to what is known and not shown, in fact, a coupling device is envisaged before this piece of equipment, in which single supports (made of paper, cardboard or other material, not shown) are fed successively and are passed into a coupling calender (not shown) where they are stuck to a continuous film of plastic material, such as polyethylene, polypropylene, etc. with aqueous or solvent- based glues, for example, with plastic thermofilms and optionally, when spreading glues are used, they are passed into specific drying tunnels or after said treatment however polymerization and stabilization between the glue, film and support take place.

After this preliminary operation, the coupled and stabilized supports with respect to the film are fed either to a roll or, after a downward U run, they are fed to the equipment of the present invention.

At the inlet of the equipment 10 there is also a stretching element 14, such as a cylinder or similar device, which acts on the coupled composite material 13 before it reaches the separation or subsequent cutting area.

The equipment 10 also envisages a further pair of calenders 15 and 16 situated at a certain distance from each other and between which there is a cutting head 17.

The cutting head 17 comprises a rotating support 18 having at least one cutting blade 19 which protrudes radially with respect to the rotating support 18.

The cutting blade 19 consists of a plate 20 or similar product made of a thermoconductive alloy material connected to a transformer 21 in turn connected to a control and regulation device 22, for example by connection of the end of the rotating support 18 with mercury joints (not shown), schematized in the figure.

The cutting blade 19 therefore consists of a completely flexible plate 20, which acts on the passing coupled material which is sustained by the pair of calenders 15 and 16 alone during the cutting. A sliding surface 23, for example made of wood, can be envisaged below the cutting head for the sole purpose of favouring the advance of the material which has undergone incision or the first cutting of the film and which must be separated downstream into single plasticized supports. To the side of the cutting head 17, in correspondence with the hour 9.00 according to the hands of the clock, there is a sensor 25 of cams carried by the support 18 of the head and not shown, which detects the starting and rest position of the cutting head. The cutting blade 19 in this rest position is situated indicatively in correspondence with the hour 15.00 according to the position of the hands of the clock.

Downstream of the two calenders 15 and 16 and cutting head 17 there is, in fact, a fast belt 24 which creates, in the known way, the final tear and separation of the single plasticized support.

According to the present invention, there is advantageously also a reading and measuring device 30 situated upstream of the cutting head 17.

More specifically, the device 30 is situated directly upstream of the calender 15 and downstream of the feeding calender 12.

Downstream of the cutting head 17, a sensor 26 reads the head of each single support forming the composite material 13 and sends a command to the reading device 30 to initiate the measuring of a preset length of said support.

In this way, the rotating head 17 is started at the end of the preset length of the single support.

The particular position of the reading device 30, situated directly upstream of the calender 15, i.e. close to the cutting head 17, does not allow errors in measuring the preset length of the single support due to the elastic behaviour of the material.

In other words, when the sensor 26 sends the command for initiating the measurement, the reading device 30 accurately calculates the exact cutting point of the support.

After this, once the plasticized support has been separated by the tear of the belt, the sensor 26 is ready to reveal the start of a new plasticized support which is arriving below it and therefore re-start its command function to the device 30.

According to a preferred embodiment, illustrated in the figures, the reading and measuring device 30 has a feeler element 34 and an encoder 35 suitable for interacting with the sensor 26 to cause the activation of the cutting head 17.

More specifically, the feeler element 34 has two opposite idle cylinders 32, 33.

The extreme simplicity of the equipment according to the invention in which the restrictions of the known art have been eliminated, appears evident from the above description.

The cutting head, in fact, does not require any contrast roll rotating at the same speed with respect to the cutting blade as the cutting is effected on the coupled material engaged simply and only on the pair of calenders 15 and 16 flanked upstream and downstream of the head.

Furthermore, there is no need for a straight horizontal course of the coupled material which can disturb the cutting action and dephase its functioning as a stable joining between film and support has already been effected upstream of the cutting head. The coupled material is in no way sustained, as in the case of the known art, and it follows a bighted course to allow stretching between support and film contrary to what is required by the known art.

The cutting is effected on a perfectly stabilized coupled material, certainly not under wet conditions as required by the known art.

There is no supporting belt or similar device of the coupled material during separation.

In particular, precision errors of the cutting point of the support are eliminated due to the elastic behaviour of the material.

It can thus be seen that the cutting equipment for plasticized supports according to the present invention achieves the objectives specified above.

The cutting equipment for plasticized supports has a particularly simple structure and does not require complicated arrangements.

The cutting equipment for plasticized supports of the present invention thus conceived can undergo numerous modifications and variations, all included in the same invention.

Furthermore, in practice the materials used, as also the dimensions and components, can vary according to technical demands.

## Claims

1. Cutting equipment for plasticized supports comprising a pair of calenders (15, 16) between which a rotating cutting head (17) is inserted, having at least one cutting blade (19) which protrudes radially, wherein a coupled composite material (13), consisting of supports overlapping at their transversal ends and plastic film which constrains them one behind the other, is fed below said head (17) said equipment comprising at least one reading and measuring device (30) situated close to said cutting head (17), directly upstream of said calender (15), **characterized in that** downstream of said cutting head (17) is envisaged a sensor (26) which reads the head of each single support forming the composite material (13) and sends a command to said reading device (30) to start the measuring of the preset length of said support, thus causing the activation of said rotating head (17) at the end of the preset length of the single support.

2. The equipment according to claim 1, **characterized in that** said reading and measuring device (30) comprises a feeler element (34) and an encoder (35) interacting with said sensor (26) to cause the activation of said cutting head (17).

3. The equipment according to claim 2, **characterized**
**in that** said feeler element (34) comprises two opposite idle cylinders (32, 33).

4. The equipment according to claim 1, **characterized in that** upstream of said pair of calenders (15, 16), there is a further feeding calender (12) of said composite material.

5. The equipment according to claim 4, **characterized in that** said reading and measuring device (30) is situated upstream of said cutting head, between said calender (15) and said feeding calender (12).

6. The equipment according to claim 1, **characterized in that** upstream of said pair of calenders (15, 16), there is a stretching element (14), such as a cylinder or the like, which acts on the coupled composite material (13) before it reaches the separation or subsequent cutting area.

7. The equipment according to claim 1, **characterized in that** said composite material comprises a continuous film of plastic material, such as polyethylene, polypropylene, etc. with glues, for example, aqueous or solvent-based, or with plastic thermofilms.

8. The equipment according to claim 1, **characterized in that** said cutting head (17) comprises a rotating support (18) having at least one cutting blade (19) which protrudes radially with respect to the rotating support (18).

9. The equipment according to claim 1, **characterized in that** a sliding surface (23) is situated below said cutting head.

10. The equipment according to claim 1, **characterized in that** said cutting blade (19) consists of a plate (20) made of a thermoconductive alloy material connected to a transformer (21) in turn connected to a control and regulation device (22).

## Patentansprüche

1. Schneidvorrichtung für kunststoffbeschichtete Trägermaterialien, mit einem Paar Kalander (15, 16), zwischen die ein rotierender Schneidkopf (17) eingesetzt ist, der wenigstens eine radial vorstehende Schneidklinge (19) aufweist, bei der ein gekoppeltes Verbundmaterial (13), das aus an ihren Querenden überlappenden Trägermaterialien und einer diese hintereinander festhaltenden Kunststofffolie besteht, unter den Kopf (17) geführt wird, wobei die Vorrichtung wenigstens eine Lese- und Messeinrichtung (30) aufweist, die nahe dem Schneidkopf (17) unmittelbar stromaufwärts des Kalanders (15) angeordnet ist, **dadurch gekennzeichnet, dass** stromabwärts des Schneidkopfes (17) ein Sensor (26) vorgesehen ist, der das Kopfende jedes einzelnen das Verbundmaterial (13) bildenden Trägermaterials erkennt und einen Befehl an die Leseeinrichtung (30) sendet, um das Messen der voreingestellten Länge des Trägermaterials zu starten und so die Aktivierung des rotierenden Kopfes (17) am Ende der voreingestellten Länge des einzelnen Trägermaterials zu bewirken.

2. Vorrichtung nach Anspruch 1, **dadurch gekennzeichnet, dass** die Lese- und Messeinrichtung (30) ein Fühlerelement (34) und einen Encoder (35) umfasst, die mit dem Sensor (26) zusammenwirken, um die Aktivierung des Schneidkopfes (17) zu veranlassen.

3. Vorrichtung nach Anspruch 2, **dadurch gekennzeichnet, dass** das Fühlerelement (34) zwei gegenüberliegende, frei laufende Walzen (32, 33) aufweist.

4. Vorrichtung nach Anspruch 1, **dadurch gekennzeichnet, dass** sich stromaufwärts des Kalanderpaares (15, 16) ein weiterer Zuführkalander (12) für das Verbundmaterial befindet.

5. Vorrichtung nach Anspruch 4, **dadurch gekennzeichnet, dass** die Lese- und Messeinrichtung (30) stromaufwärts des Schneidkopfes zwischen dem Kalander (15) und dem Zuführkalander (12) angeordnet ist.

6. Vorrichtung nach Anspruch 1, **dadurch gekennzeichnet, dass** sich stromaufwärts des Kalanderpaars (15, 16) ein Streckelement (14) wie etwa ein Zylinder oder dergleichen befindet, das auf das gekoppelte Verbundmaterial (13) wirkt, bevor es den Trennbereich oder den anschließenden Schneidbereich erreicht.

7. Vorrichtung nach Anspruch 1, **dadurch gekennzeichnet, dass** das Verbundmaterial eine durchgehende Folie aus Kunststoffmaterial, wie etwa Polyethylen, Polypropylen, etc. mit Klebstoffen, z.B. wässrigen oder lösungsmittelbasierten, oder mit Kunststoffschmelzfolien umfasst.

8. Vorrichtung nach Anspruch 1, **dadurch gekennzeichnet, dass** der Schneidkopf (17) einen sich drehenden Träger (18) mit wenigstens einer Schneidklinge (19) aufweist, die bezüglich des sich drehenden Trägers (18) radial vorsteht.

9. Vorrichtung nach Anspruch 1, **dadurch gekennzeichnet, dass** unter dem Schneidkopf eine Gleitfläche (23) angeordnet ist.

10. Vorrichtung nach Anspruch 1, **dadurch gekennzeichnet, dass** die Schneidklinge (19) aus einer Platte (20) besteht, die aus einem wärmeleitenden Legierungsmaterial hergestellt ist, welches mit einem Wandler (21) verbunden ist, der seinerseits mit einer Steuer- und Regelungseinrichtung (22) verbunden ist.

## Revendications

1. Dispositif de coupe pour supports plastifiés, comportant une paire de calandres (15, 16) entre lesquelles se trouve une tête de coupe rotative (17) comportant au moins une lame de coupe (19) qui fait saillie radialement, dans lequel dispositif est introduit, sous ladite tête (17), un matériau composite accouplé (13) constitué de supports se chevauchant au niveau de leurs extrémités transversales et d'un film de matière plastique qui les maintient serrés l'un derrière l'autre, et lequel dispositif comprend au moins un dispositif de lecture et mesure (30) situé à proximité de ladite tête de coupe (17), juste en amont de ladite calandre (15), **caractérisé en ce qu'**il y a, en aval de ladite tête de coupe (17), un capteur (26) qui détecte l'avant de chaque support simple formant le matériau composite (13) et envoie audit dispositif de lecture (30) la commande de commencer à mesurer la longueur dudit support, fixée au préalable, ce qui entraîne l'activation de ladite tête de coupe rotative (17) à la fin de la longueur fixée au préalable du support simple.

2. Dispositif conforme à la revendication 1, **caractérisé en ce que** ledit dispositif de lecture et mesure (30) comporte un élément palpeur (34) et un codeur (35) interagissant avec ledit capteur (26) pour provoquer l'activation de ladite tête de coupe (17).

3. Dispositif conforme à la revendication 2, **caractérisé en ce que** ledit élément palpeur (34) comporte deux rouleaux libres opposés (32, 33).

4. Dispositif conforme à la revendication 1, **caractérisé en ce qu'**il y a, en amont de ladite paire de calandres (15, 16), une autre calandre (12) d'alimentation en ledit matériau composite.

5. Dispositif conforme à la revendication 4, **caractérisé en ce que** ledit dispositif de lecture et mesure (30) est placé en amont de ladite tête de coupe, entre ladite calandre (15) et ladite calandre d'alimentation (12).

6. Dispositif conforme à la revendication 1, **caractérisé en ce qu'**il y a, en amont de ladite paire de calandres (15, 16), un élément d'étirage (14), tel un cylindre ou similaire, qui agit sur le matériau composite accouplé (13) avant que celui-ci atteigne la zone de séparation ou de coupe suivante.

7. Dispositif conforme à la revendication 1, **caractérisé en ce que** ledit matériau composite comprend un film continu de matière plastique, telle que du polyéthylène, du polypropylène, etc., associé à des colles, par exemple à base d'eau ou de solvant, ou à des thermofilms de plastique.

8. Dispositif conforme à la revendication 1, **caractérisé en ce que** ladite tête de coupe (17) comprend un support rotatif (18) portant au moins une lame de coupe (19) qui fait radialement saillie par rapport au support rotatif (18).

9. Dispositif conforme à la revendication 1, **caractérisé en ce qu'**il y a une surface de glissement (23) qui est située sous ladite tête de coupe.

10. Dispositif conforme à la revendication 1, **caractérisé en ce que** ladite lame de coupe (19) consiste en une plaque (20) en alliage thermo-conducteur, connectée à un transformateur (21) qui est lui-même connecté à un dispositif de commande et régulation (22).
